# EUROPÄISCHE PATENTSCHRIFT

(11) **EP 0 838 054 B1**
(45) Veröffentlichungstag und Bekanntmachung des Hinweises auf die Patenterteilung: **06.10.1999**
(21) Anmeldenummer: 97909055.2
(22) Anmeldetag: 22.04.1997
(51) Int. Cl.: G06F 9/44

(54) **VERFAHREN UND STEUEREINRICHTUNG FÜR EINE GRAPHISCHE STEUERUNG VON ABLÄUFEN IN EINEM NETZWERKMANAGEMENTSYSTEM**
GRAPHIC CONTROL PROCESS AND DEVICE FOR CONTROLLING OPERATIONS IN A NETWORK MANAGEMENT SYSTEM
PROCEDE ET DISPOSITIF DE COMMANDE POUR UNE COMMANDE GRAPHIQUE D'OPERATIONS DANS UN SYSTEME DE GESTION D'UN RESEAU

(30) Priorität: 22.04.1996 DE 19615683
(43) Veröffentlichungstag der Anmeldung: 29.04.1998
(73) Patentinhaber: ALCATEL, 75008 Paris (FR)
(72) Erfinder: SUCKOW, Ralf, D-10318 Berlin (DE)
(74) Vertreter: Zinsinger, Norbert
(86) Internationale Anmeldenummer: EP9702427
(87) Internationale Veröffentlichungsnummer: WO9740442

(56) Entgegenhaltungen:
- US-A- 5 381 548
- US-A- 5 481 712
- COMPUTER JOURNAL, Bd. 34, Nr. 4, 1.August 1991, Seiten 320-330, XP000260979 PONG M C: "I-PIGS: AN INTERACTIVE GRAPHICAL ENVIRONMENT FOR CONCURRENT PROGRAMMING"
- IEEE COMMUNICATIONS MAGAZINE, Bd. 33, Nr. 11, 1.November 1995, Seiten 72-76, XP000545288 SCHMIDT C ET AL: "DO-IT-YOURSELF TMN APPLICATIONS BY VISUAL PROGRAMMING METHODS" in der Anmeldung erwähnt

## Beschreibung

Die vorliegende Erfindung betrifft ein Verfahren und eine Steuereinrichtung für eine graphische Steuerung von Abläufen in einem Netzwerkmanagementsystem.

Bei einem Netzwerkmanagementsystem entwerfen Bedienpersonen Programme zur Erstellung von Abläufen zur Steuerung von Netzwerkelementen. Ein solcher Ablauf ist eine Reihenfolge von Anwendungsaufrufen, von Steuerfunktionen, von Zuweisungen, etc. in dem Netzwerkmanagementsystem. Für die Erstellung der Abläufe werden von den Bedienpersonen spezielle Skriptsprachen verwendet, die es einem nicht erfahrenen Programmierer ermöglichen, komplexe Managementaufgaben in einfacher, verständlicher Weise zu definieren. Solche Skriptsprachen sind proprietär und für die Umwandlung der Anweisungen der Skriptsprache in Anweisungen in einer komfortableren höheren Programmiersprache zur Ausführung der Managementaufgaben muß ein spezieller Interpreter entwickelt werden.

Aus "Do it yourself TMN applications by visual programming methods" von C. Schmidt et al, International Switching Symposium April 1995, Volume 2, B 8.2 ist bekannt, daß die Anweisungen in der Skriptsprache durch optische Programmiertechniken, wie z. B. mittels Hypertextstrukturen, unterstützt werden können. Bei der bekannten Programmierweise gemäß des obigen Artikels werden vordefinierte Blocks ("Templates") erstellt, die einer Anweisung in der Skriptsprache entsprechen. Die Blocks werden mittels Hypertext auf einem Bildschirm dargestellt und eine Bedienperson kann mittels einer Maus die Blocks in der gewünschten Weise miteinander verbinden. Auf diese Weise werden die Abläufe zur Steuerung der Netzwerkelemente erstellt. Durch die vorgeschlagene optische Programmiertechnik erhält die Bedienperson eine bloße Anzeige des Ablaufes mittels Text und Graphik. Die Informationsverarbeitung der einzelnen Ablaufschritte, d. h. Schleifen, Bedingungen, etc., zur Verknüpfung der Ablaufschritte muß von der Bedienperson durch die Skriptsprache selbst erstellt werden.

Es ist die Aufgabe der vorliegenden Erfindung, eine einfache Steuerung von Netzwerkelementen in einem Netzwerkmanagementsystem durch eine Bedienperson zu ermöglichen.

Diese Aufgabe ist durch die technische Lehre des Anspruchs 1 oder des Anspruchs 9 gelöst.

Aufgrund der Erfindung ist es vorteilhafterweise nicht mehr notwendig, daß die Bedienperson zur eigentlichen Ausführung des Ablaufes Kenntnisse zur Verknüpfung der verschiedenen Ablaufschritte hat.

Vorteilhafte Ausgestaltungen der Erfindung sind den abhängigen Patentansprüchen zu entnehmen.

Im folgenden wird die Erfindung zur Verdeutlichung anhand von Ausführungsbeispielen und den Figuren 1 bis 3 beschrieben. Es zeigen:
- Fig. 1: ein Ablaufdiagramm eines ersten Ausführungsbeispiels der Erfindung,
- Fig. 2 a - b: ein zweites Ausführungsbeispiel der Erfindung und
- Fig. 3 a - d: ein drittes Ausführungsbeispiel der Erfindung.

Die vorliegende Erfindung wird in einem Netzwerkmanagementsystem eines Telekommunikationsnetzes angewendet. Von einer Netzwerkmanagementzentrale aus werden dabei Netzwerkelemente des Telekommunikationsnetzwerkes gesteuert. Solche Netzwerkelemente sind beispielsweise Vermittlungsstellen, Datenbanken, Zugangsnetze, etc. Von Bedienpersonen werden dabei Abläufe zur Steuerung der Netzwerkelemente erstellt. Ein solcher Ablauf kann beispielsweise das Einrichten einer Verbindungsleitung zwischen zwei Vermittlungsstellen, das Einrichten, Ändern, Löschen eines Teilnehmers an einer Vermittlungsstelle, etc. sein. Ein solcher Ablauf besteht aus mehreren Ablaufschritten. Die Bedienperson beschreibt die Abläufe als Programm in einer Programmiersprache, das aus Befehlsblöcken zur Ausführung der jeweiligen Ablaufschritte und Steueranweisungen zur Verknüpfung der Befehlsblöcke besteht. Die Befehlsblöcke und die Steueranweisungen werden dabei vorteilhafterweise in der gleichen Programmiersprache verfaßt. Eine vorteilhafte Programmiersprache ist für die vorliegende Erfindung die Programmiersprache JAVA. Die verwendete Programmiersprache sollte eine einfach aufgebaute Syntax mit wenig Datentypen haben, so daß auch eine Bedienperson mit wenig Programmiererfahrung Anweisungen in dieser Sprache formulieren kann. Die Programmiersprache sollte modular aufgebaut sein und insbesondere sollten während des Programmablaufs dynamisch Module einbindbar sein. Solche Module sind voneinander unabhängig und realisieren jeweils eine Teilaufgabe, wie beispielsweise für die graphische Steuerung, die Mensch-Maschine-Kommunikation, für Datenbankanbindungen, etc. Vorteilhafterweise ist es möglich, Module von Drittherstellern einzubinden. Bei der Verwendung von JAVA als Programmiersprache stehen Interpreter bereits zur Verfügung. Ein solcher JAVA-Interpreter kann beispielsweise ein JAVA-fähiger World Wide Web-Browser, wie z. B. Netscape 2.0, oder ein JAVA-Interpreter wie Applet-Viewer sein.

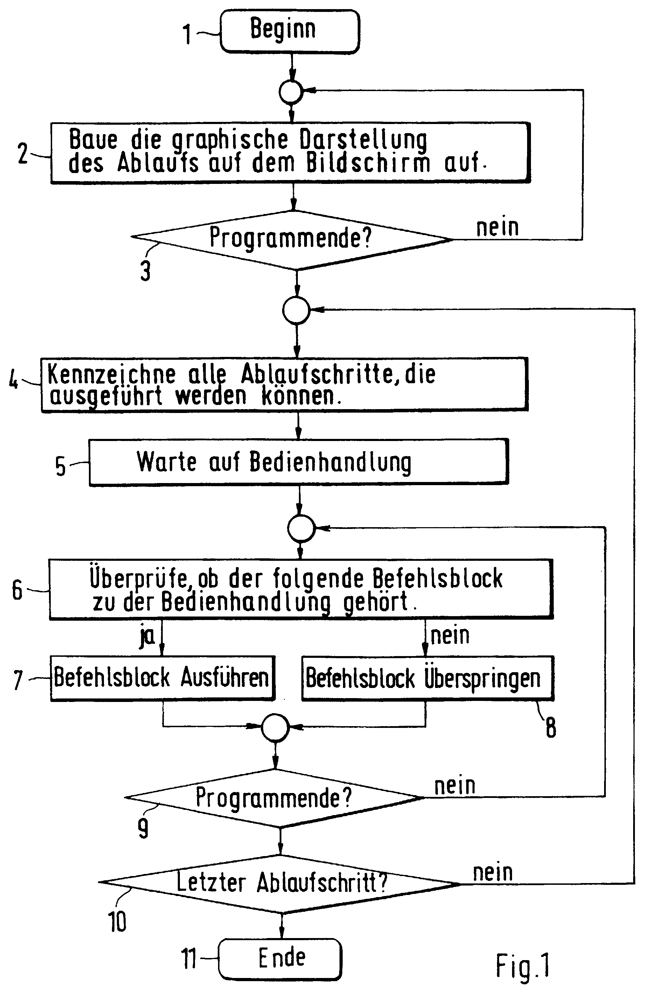

Figur 1 zeigt das Ablaufdiagramm des ersten Ausführungsbeispiels der Erfindung. In einem Schritt 1 beginnt das erfindungsgemäße Verfahren. In einem Schritt 2 wird eine graphische Darstellung des Ablaufs in Form eines Programmablaufplanes auf einem Bildschirm der Netzwerkmanagementzentrale aufgebaut. Dazu werden die in dem Programm vorhandenen Steueranweisungen zur Verknüpfung der Befehlsblöcke ausgeführt. Die Befehlsblöcke zur Ausführung der Ablaufschritte werden bei diesem Durchlauf des Programms übersprungen. In einem Schritt 3 wird nach dem Aufbau des Programmablaufplanes überprüft, ob das Programm beendet ist. Ist dies nicht der Fall, so verzweigt das Verfahren erneut zum Schritt 2. Ist dies der Fall, so folgt ein Schritt 4, in dem alle Ablaufschritte, die aufgrund der augenblicklich vorliegenden Ablaufsituation ausgeführt werden können, gekennzeichnet werden. Eine solche Kennzeichnung kann beispielsweise eine Änderung der Farbe der graphischen Darstellung des jeweiligen ausführbaren Ablaufschrittes im Programmablaufplan sein. Es ist aber auch möglich, eine andere Kennzeichnung der ausführbaren Ablaufschritte zu verwenden. Aufgrund dieser Kennzeichnung der ausführbaren Ablaufschritte erkennt die Bedienperson sofort, welche Steuerungsmöglichkeiten des Ablaufes bestehen, und welcher Ablaufschritt als nächstes von ihr ausgewählt werden könnte. In einem Schritt 5 wartet das erfindungsgemäße Verfahren auf eine Bedienhandlung der Bedienperson. Eine solche Handlung könnte beispielsweise ein Mausklick auf die graphische Darstellung des ausgewählten Ablaufschrittes im Programmablaufplan sein. Anschließend wird das Programm erneut ausgeführt. Dabei werden die Befehle zum Aufbau der graphischen Darstellung der einzelnen Ablaufschritte für den Programmablaufplan übersprungen. In einem Schritt 6 wird überprüft, ob der bei der Ausführung des Programms als nächstes folgende Befehlsblock der Befehlsblock zur Ausführung des ausgewählten Ablaufschrittes ist. Ist dies der Fall, dann wird in einem Schritt 7 dieser Befehlsblock und damit der zugehörige, von der Bedienperson ausgewählte Ablaufschritt ausgeführt. Gehört der folgende Befehlsblock nicht zu dem ausgewählten Ablaufschritt, dann wird in einem Schritt 8 dieser Befehlsblock übersprungen. In einem Schritt 9 wird daraufhin überprüft, ob das Programmende erreicht ist. Ist dies nicht der Fall, so verzweigt das erfindungsgemäße Verfahren erneut zum Schritt 6, um das Programm durchzuführen und mit der Überprüfung des nächsten folgenden Befehlsblocks fortzufahren. Wird in dem Schritt 9 festgestellt, daß das Programmende erreicht ist, so folgt in einem Schritt 10 eine Überprüfung, ob der letzte Ablaufschritt des Ablaufes erreicht wurde. Ist dies nicht der Fall, so verzweigt das erfindungsgemäße Verfahren erneut zu dem Schritt 4 und kennzeichnet alle Ablaufschritte, die aufgrund der neuen, nach Ausführung des in Schritt 5 ausgewählten Befehlsblocks entstandenen Ablaufsituation von der Bedienperson zur Ausführung ausgewählt werden können. Die Schritte 5 bis 10 werden anschließend wie oben beschrieben wiederholt. Wird in dem Schritt 10 festgestellt, daß der letzte Ablaufschritt erreicht ist, so wird das erfindungsgemäße Verfahren in einem Schritt 11 beendet.

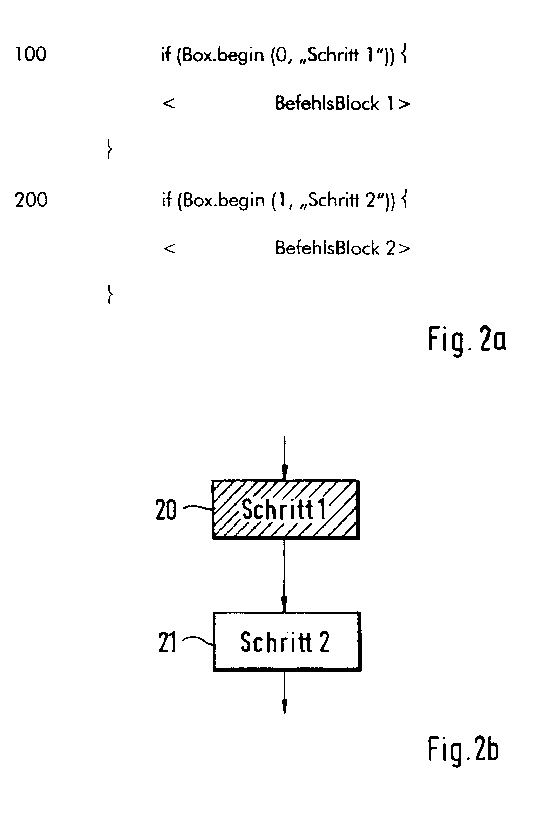

Die Figuren 2a und b zeigen das zweite Ausführungsbeispiel der Erfindung. Figur 2a zeigt einen Auszug aus einem möglichen Programm zur Erstellung eines Ablaufes. Figur 2b zeigt einen Programmablaufplan für diesen Ablauf. Der Programmauszug gemäß Figur 2a ist in der Programmiersprache JAVA geschrieben. In einer Zeile 100 wird eine Steueranweisung zum Aufbau einer graphischen Darstellung eines ersten Ablaufschrittes definiert. Box ist eine Objektklasse, in der Funktionen, die eine bestimmte Datenstruktur verarbeiten können, zusammengefaßt sind. Box.begin ist dabei eine solche Funktion der Objektklasse Box der Programmiersprache JAVA, in der die graphische Darstellung des ersten Ablaufschrittes in Form eines Kastens, wie er in einem Kasten 20 der Figur 2b dargestellt ist, realisiert ist. Die Null dient dazu, den diesem Ablaufschritt zugeordneten Befehlsblock bei der internen Darstellung zu identifizieren. Die Angabe von "Schritt 1" bedeutet, daß der Text Schritt 1 in den Kasten 20 der Figur 2b zu schreiben ist. Die Angabe "Schritt 1" stellt eine Bezeichnung des ersten Ablaufschrittes für die Darstellung im Programmablaufplan gemäß Figur 2b dar. Der Steueranweisung der Zeile 100 folgt nun ein Befehlsblock 1 zur Ausführung des ersten Ablaufschrittes. Dieser Befehlsblock ist in der Figur 2a im einzelnen nicht dargestellt. In einer Zeile 200 ist eine Steueranweisung zum Aufbau einer graphischen Darstellung eines zweiten Ablaufschrittes in Form eines Kastens 21 gemäß der Figur 2b definiert. Die Zahl 1 dient zur internen Identifizierung eines Befehlsblocks 2 zur Ausführung des zweiten Ablaufschrittes. "Schritt 2" ist die Bezeichnung, die in den Kasten 21 der Figur 2b für die graphische Darstellung des zweiten Ablaufschrittes im Programmablaufplan zu schreiben ist. "Schritt 2" ist eine Bezeichnung für diesen zweiten Ablaufschritt. Anschließend folgt in der Figur 2a der Befehlsblock 2 zur Ausführung des zweiten Ablaufschrittes. Dieser Befehlsblock 2 ist im einzelnen nicht in der Figur 2 dargestellt.

Für die Ausführung der Erfindung durch die Bedienperson wird ein zweistufiger Ausführungsmechanismus des Programms verwendet. Die Funktion Box.begin wird im vorliegenden Ausführungsbeispiel sowohl für die Darstellung des jeweiligen Ablaufschrittes in dem Programmablaufplan als auch für die Ausführung des Befehlsblocks des jeweiligen Ablaufschrittes verwendet. Das Verhalten der Funktion Box.begin hängt von dem Wert einer globalen Variablen ab, auf die die Funktion Box.begin zugreift. Eine solche globale Variable ist für alle Funktionen verwendbar, im Gegensatz zu einer lokalen Variable, deren Verwendung auf eine Funktion beschränkt ist.

Bei der ersten Ausführung des Programms gemäß Figur 2a hat diese globale Variable, die in der Figur 2a nicht dargestellt ist, einen ersten Wert A. In diesem Fall baut die Funktion Box.begin gemäß der Steueranweisung in Zeile 100 den Kasten 20 gemäß Figur 2b auf. Dieser Kasten 20 ist intern identifiziert mit Null und hat die Bezeichnung "Schritt 1". Der dem ersten Ablaufschritt zugeordnete Befehlsblock 1 wird übersprungen. Entsprechendes wird für die Steueranweisung gemäß Zeile 200 der Figur 2a durchgeführt. Nach Beendigung dieser ersten Ausführung des Programmes ist auf dem Bildschirm der Netzwerkmanagementzentrale ein Programmablaufplan gemäß der Figur 2b zu sehen. Anschließend wertet das Programm aktuelle Daten der Netzwerkelemente aus, um die aktuelle Ablaufsituation festzustellen. Entsprechend dieser Ablaufsituation wird der nun ausführbare Ablaufschritt im Programmablaufplan gekennzeichnet, beispielsweise durch eine Farbänderung, und das Programm erwartet eine Bedienhandlung zur Auswahl des ausführbaren Ablaufschrittes durch die Bedienperson. Im vorliegenden Ausführungsbeispiel ist der erste Ablaufschritt der ausführbare Ablaufschritt.

Bei der zweiten Ausführung des Programmes hat die globale Variable einen zweiten Wert B. Sobald die Bedienperson den ersten Ablaufschritt auswählt, beispielsweise mittels eines Mausklicks auf den Kasten 20, wird die Steueranweisung der Zeile 100 so ausgeführt, daß sie erneut auf die globale Variable zugreift und der dem ersten Ablaufschritt zugeordnete Befehlsblock 1 ausgeführt wird. Bei dem zweiten Ablaufschritt werden dessen Steueranweisung zum Aufbau der graphischen Darstellung des zweiten Ablaufschrittes und zur Ausführung des Befehlsblocks 2 übersprungen. Anschließend wertet das Programm erneut die aktuellen Daten der Netzwerkelemente nach Ausführung des ersten Ablaufschrittes aus, um die neue aktuelle Ablaufsituation festzustellen. Der nun ausführbare Ablaufschritt, beispielsweise der zweite Ablaufschritt, wird gekennzeichnet und eine erneute Eingabe zur Auswahl des ausführbaren Ablaufschrittes durch eine Bedienhandlung erwartet.

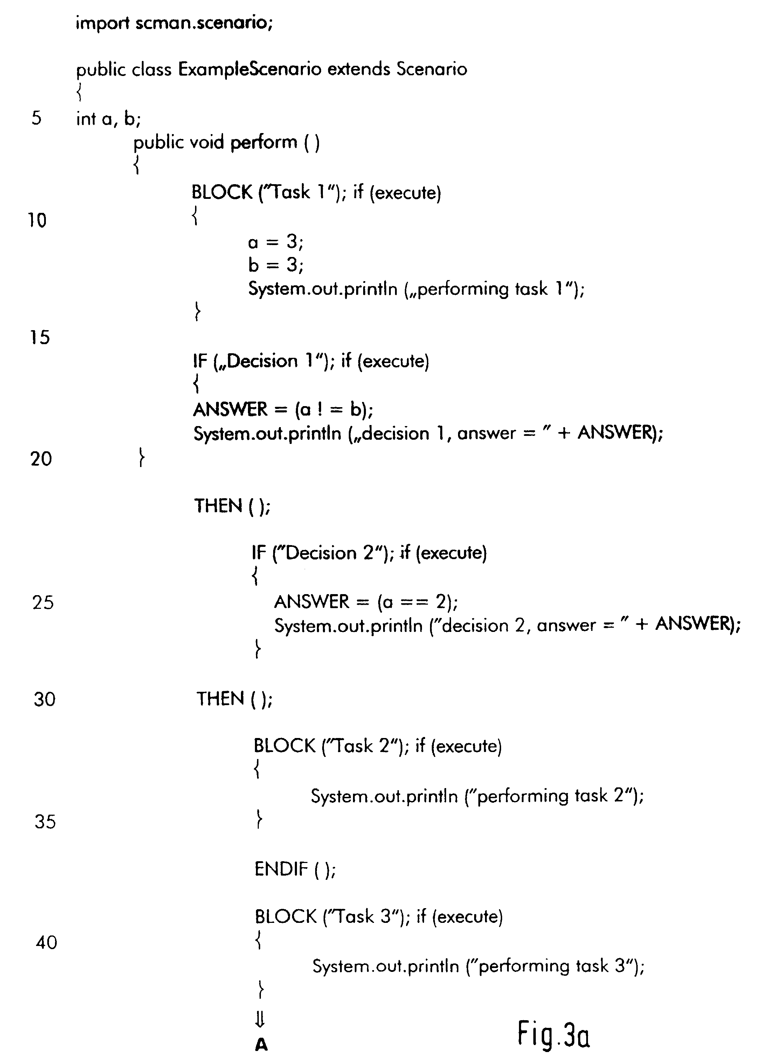

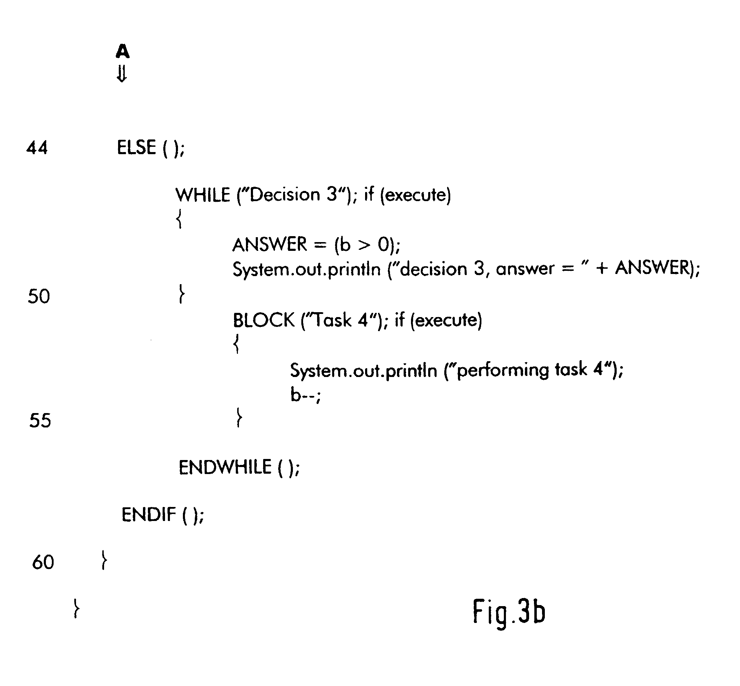

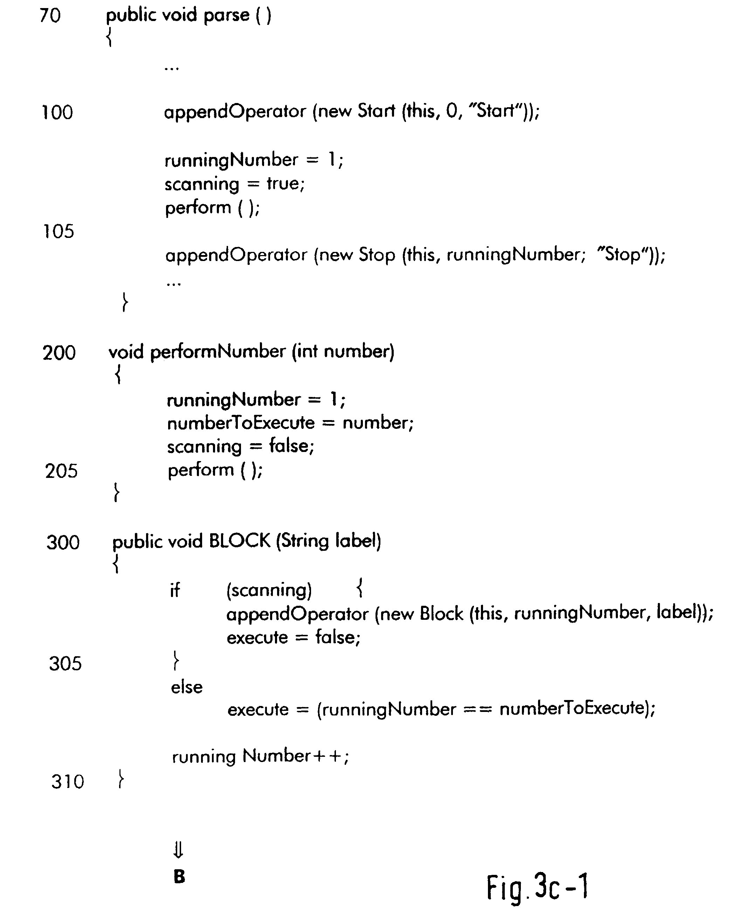

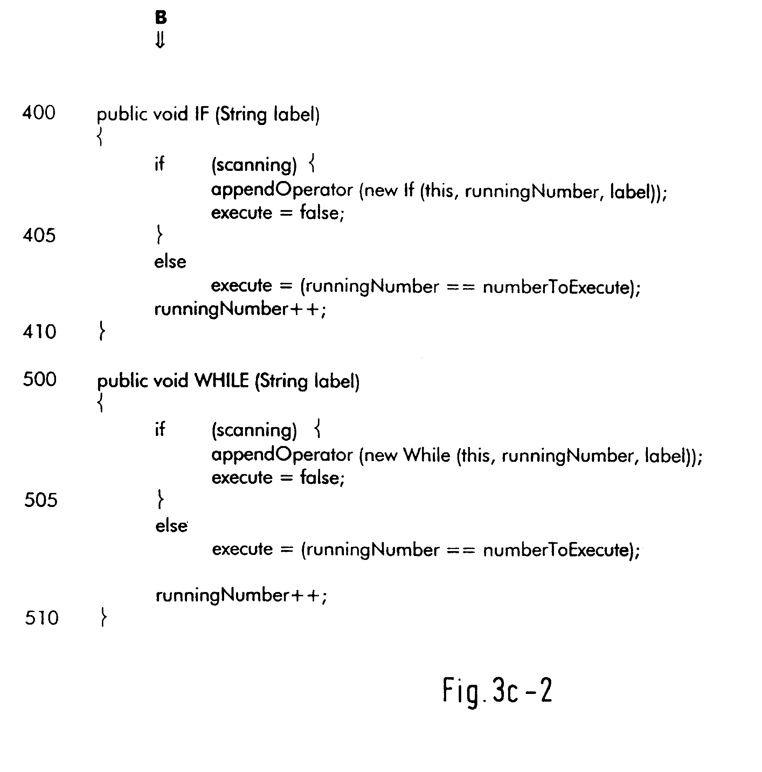

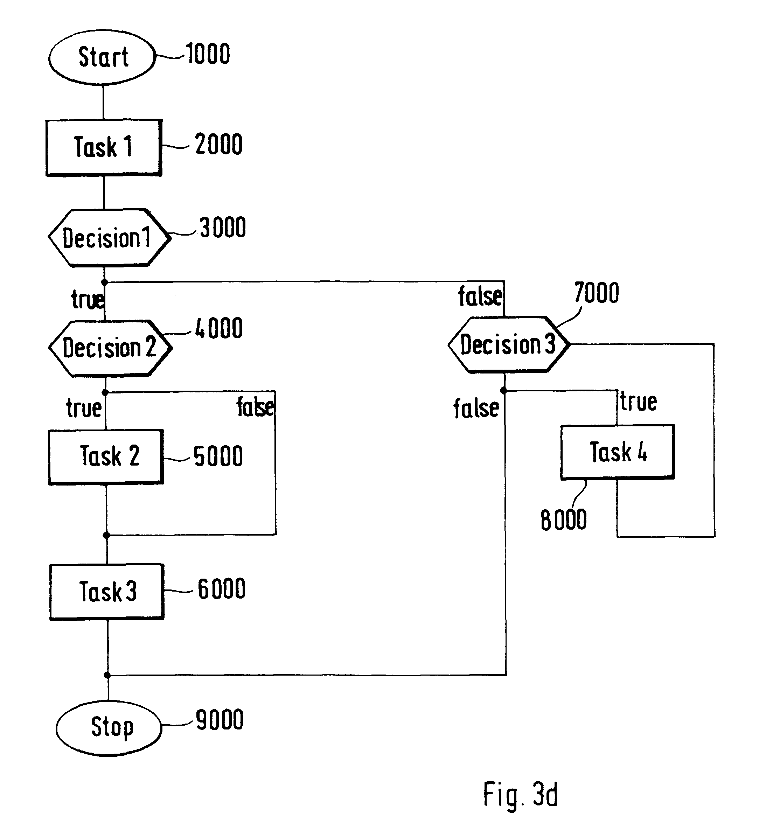

Die Figuren 3a bis 3d zeigen ein drittes Ausführungsbeispiel der Erfindung. Die Figuren 3a und 3b zeigen ein Programm zur Definition eines Ablaufes. Figur 3d zeigt den dazugehörigen Programmablaufplan dieses Ablaufes und Figur 3c ein Programm zur Ausführung des Ablaufes. Die Programme sind in der Programmiersprache JAVA verfaßt.

In dem Programm zur Definition des Ablaufes gemäß der Figuren 3a, 3b wird in der Zeile 1 eine Bibliothek mit dem Namen scman geladen. Diese Bibliothek enthält verschiedene Objektklassen. Eine dieser Objektklassen ist die Klasse Scenario. In der Klasse Scenario sind Funktionen für die Erstellung von Abläufen zusammengefaßt, die die gleichen Datenstrukturen verarbeiten können. In den Zeilen 3 und 7 wird den Funktionen der Klasse Scenario die Funktion perform hinzugefügt. Mit der Funktion perform wird der vorliegende Ablauf festgelegt. Der Ablauf enthält sieben Ablaufschritte, die aufgrund der Steueranweisungen in dem Programm zur Definition des Ablaufes gemäß der Figuren 3a, 3b miteinander verknüpft sind. In einem ersten Ablaufschritt wird eine erste Aufgabe Task 1 definiert. Diese erste Aufgabe wird in den Zeilen 9 bis 14 der Figur 3a festgelegt und in der Figur 3d als Schritt 2000 in Form eines Kastens im Programmablaufplan dargestellt. Als zweiter Ablaufschritt folgt eine erste Entscheidung Decision 1, die in den Zeilen 16 bis 20 der Figur 3a festgelegt und in dem Schritt 3000 der Figur 3d dargestellt ist. In dem zweiten Ablaufschritt wird eine Bedingung überprüft. Ist diese Bedingung erfüllt, dann folgt ein dritter Ablaufschritt in Form einer zweiten Entscheidung Decision 2, die in den Zeilen 24 bis 28 der Figur 3a festgelegt und als Schritt 4000 in der Figur 3d dargestellt ist. In dieser zweiten Entscheidung wird eine weitere Bedingung überprüft. Ist diese weitere Bedingung erfüllt, so folgt ein vierter Ablaufschritt in Form einer zweiten Aufgabe Task 2, die in den Zeilen 32 bis 35 der Figur 3a festgelegt und als Schritt 5000 in der Figur 3d dargestellt ist. Ist die weitere Bedingung, die bei der zweiten Entscheidung im Schritt 4000 überprüft wird, nicht erfüllt, so wird der vierte Ablaufschritt übersprungen. Anschließend folgt ein fünfter Ablaufschritt in Form einer dritten Aufgabe Task 3, die in den Zeilen 39 bis 42 der Figur 3a festgelegt und in einem Schritt 6000 in der Figur 3d dargestellt ist. Wurde die dritte Aufgabe Task 3 ausgeführt, dann wird der Ablauf beendet. Dies ist in einem Schritt 9000 in der Figur 3d dargestellt. Ist die Bedingung, die bei der ersten Entscheidung im zweiten Ablaufschritt überprüft wird nicht erfüllt, so wird nach dem zweiten Ablaufschritt zu einem sechsten Ablaufschritt verzweigt. Dieser sechste Ablaufschritt ist eine dritte Entscheidung Decision 3, die in den Zeilen 46 bis 50 festgelegt und als ein Schritt 7000 in der Figur 3d dargestellt ist. In diesem sechsten Ablaufschritt wird eine andere Bedingung überprüft. Ist diese andere Bedingung erfüllt, so folgt ein siebter Ablaufschritt in Form einer vierten Aufgabe Task 4. Diese vierte Aufgabe ist in den Zeilen 51 bis 55 der Figur 3b festgelegt und als sein Schritt 8000 in der Figur 3d dargestellt. Nach dem siebten Ablaufschritt verzweigt der Ablauf erneut zu dem sechsten Ablaufschritt mit der dritten Entscheidung. Ist die andere Bedingung, die in dem sechsten Ablaufschritt überprüft wird, nicht erfüllt, dann wird der Ablauf beendet. Dies ist in dem Schritt 9000 in der Figur 3d dargestellt.

Figur 3c zeigt einen Teil eines Programms zur Ausführung des Ablaufes. Mittels einer Funktion parse in Zeile 70 der Figur 3c wird eine erste Ausführung des Programmes zum Aufbau des Programmablaufplanes gemäß der Figur 3d gestartet. Mittels des Befehls appendOperator in Zeile 100 wird die graphische Darstellung des Starts gemäß des Schrittes 1000 der Figur 3d in dem Programmablaufplan erzeugt. In einer Zeile 102 wird ein interner Zähler mit der Bezeichnung runningNumber gleich 1 gesetzt. In der Zeile 103 wird einer globalen Variablen scanning der Wert true zugewiesen. Diese globale Variable scanning gibt an, ob bei der Ausführung des Programmes die graphische Darstellung des jeweiligen Ablaufschrittes in dem Programmablaufplan aufgrund der Steueranweisungen in dem Programm zur Definition des Ablaufes gemäß der Figuren 3a, 3b erzeugt werden sollen. Hat die globale Variable scanning den Wert true, dann wird die graphische Darstellung erzeugt, hat sie den Wert false, dann wird die graphische Darstellung nicht erzeugt und eine Entscheidung über die Ausführung des zugeordneten Befehlsblocks getroffen. In der Zeile 104 wird die Funktion perform aufgerufen, mit der der Ablauf gemäß der Figuren 3a, 3b definiert ist. In der Zeile 9 der Figur 3a wird für den ersten Ablaufschritt der Befehl BLOCK aufgerufen. Dieser Befehl BLOCK ist in den Zeilen 300 bis 310 der Figur 3c definiert. Die Verhaltensweise des Befehls BLOCK wird in den Zeilen 302 bis 307 in Form einer Bedingung festgelegt. In der Zeile 302 wird überprüft, welchen Wert die Variable scanning hat. Aufgrund der Festlegung in Zeile 103 der Figur 3c besitzt die globale Variable scanning den Wert true. Die Bedingung in der Zeile 302 ist daher erfüllt und die Befehle in den Zeilen 303 und 304 werden daher anschließend ausgeführt. Mit der Zeile 303 und dem Befehl appendOperator wird ein neuer Ablaufschritt in Form des Kastens 2000 mit der Beschriftung Task 1 in den Programmablaufplan gemäß der Figur 3d aufgenommen. Diesem ersten Ablaufschritt wird für die interne Darstellung eine Nummer zugewiesen. Diese Nummer entspricht im vorliegenden Fall dem Wert des internen Zählers runningNumber. Da gemäß der Zeile 102 der Wert der runningNumber 1 beträgt, ist die Nummer des ersten Ablaufschrittes für die interne Darstellung 1. In der Zeile 304 wird einer Variablen execute der Wert false zugewiesen. Der Befehl gemäß der Zeile 307 wird nicht ausgeführt, da die Bedingung gemäß der Zeile 302 erfüllt ist, da die globale Variable scanning den Wert true besitzt. Daraufhin wird gemäß der Zeile 309 der Figur 3c der Wert des internen Zählers runningNumber um 1 auf den Wert 2 erhöht. Das Programm springt anschließend wieder zu der Zeile 9 der Figur 3a und überprüft den Wert der Variablen execute. Da die Variable execute in der Zeile 304 der Figur 3c gleich false gesetzt wurde, ist die Bedingung gemäß der Zeile 9 der Figur 3a nicht erfüllt und die Befehle gemäß der Zeilen 10 bis 14 der Figur 3a werden übersprungen.

In der Zeile 16 der Figur 3a wird die Funktion IF aufgerufen. Diese Funktion IF ist in den Zeilen 400 bis 410 der Figur 3c definiert und entspricht weitgehend der Definition BLOCK gemäß der Zeilen 300 bis 310 der Figur 3c mit der Ausnahme, daß statt des Kastens zur graphischen Darstellung einer Aufgabe in dem Programmablaufplan gemäß der Figur 3d eine rautenähnliche graphische Darstellung für eine Entscheidung in dem Programmablaufplan dargestellt wird. Gemäß der Zeile 402 wird der Wert der globalen Variable scanning überprüft. Da dieser Wert gemäß der Festlegung in der Zeile 103 true ist, ist die Bedingung gemäß der Zeile 402 erfüllt und mittels des Befehls appendOperator in der Zeile 403 wird der zweite Ablaufschritt 3000 in den Programmablaufplan gemäß der Figur 3d aufgenommen. Dem zweiten Ablaufschritt 3000 wird die interne Nummer 2 zugewiesen, die dem aktuellen Wert des internen Zählers runningNumber entspricht. In der Zeile 404 wird daraufhin der Wert der Variablen execute gleich false gesetzt und anschließend der Befehl in Zeile 407 übersprungen, da die Bedingung in Zeile 402 erfüllt ist. In der Zeile 409 wird daraufhin der Wert des internen Zählers runningNumber um 1 auf 3 erhöht. AnschTießend wird gemäß der Zeile 16 der Figur 3a der Wert der Variablen execute überprüft. Da die Variable execute den Wert false hat, ist die Bedingung nicht erfüllt und die Befehle in den Zeilen 18 und 19 der Figur 3a werden übersprungen. Entsprechend werden der dritte, vierte und fünfte Ablaufschritt als graphische Darstellungen in dem Programmablaufplan entsprechend der Figur 3d und der Anweisungen gemäß der Zeilen 22 bis 42 der Figur 3a dargestellt. In der Zeile 46 der Figur 3b wird eine WHILE-Funktion aufgerufen. Diese WHILE-Funktion ist in den Zeilen 500 bis 510 der Figur 3c festgelegt. Die Festlegung der WHILE-Funktion entspricht derjenigen der BLOCK- und IF-Funktion. Es wird wie bei der IF-Funktion eine rautenförmige graphische Darstellung, in diesem Fall für den sechsten Ablaufschritt, in dem Programmablaufplan gemäß der Figur 3d aufgebaut. Im Unterschied zur IF-Funktion bewirkt die WHILE-Funktion ein Zurückverzweigen des Ablaufes zu diesem sechsten Ablaufschritt nach der Erkennung des Befehls ENDWHILE in Zeile 57 der Figur 3b. Nach Abschluß dieser ersten Ausführung der perform-Funktion wird in einem Schritt 106 der Figur 3c mittels des Befehls appendOperator eine graphische Darstellung für die Beendigung des Ablaufes in dem Programmablaufplan aufgebaut. Diese graphische Darstellung erhält die Bezeichnung Stop.

Anschließend werden in der Figur 3c nicht dargestellte Anweisungen zur Auswertung von Daten des Netzwerkmanagementsystems ausgeführt, um damit eine nun vorhandene aktuelle Ablaufsituation zu ermitteln. Aufgrund dieser Auswertung markiert das erfindungsgemäße Verfahren diejenigen Ablaufschritte, die aufgrund der augenblicklichen Ablaufsituation ausgeführt werden können. Eine solche Markierung kann, wie bereits oben erwähnt, eine farbliche Änderung des ausführbaren Ablaufschrittes in dem Programmablaufplan sein. Das Programm wartet anschließend auf eine Bedienhandlung für die Auswahl eines der ausführbaren Ablaufschritte. Wurde eine solche Bedienhandlung in Form einer Eingabe, beispielsweise eines Mausklicks, empfangen, so wird in der Zeile 200 der Figur 3c die zweite Ausführung des Programms gestartet. In der Zeile 201 wird der interne Zähler runningNumber erneut gleich 1 gesetzt. In der Zeile 202 wird der Variablen numberToExecute der Wert der Variablen number zugewiesen. Diese Variable number hat den Wert der Nummer der internen Darstellung desjenigen Ablaufschrittes, der durch die Bedienhandlung ausgewählt wurde. Wurde also beispielsweise der erste Ablaufschritt 2000 durch die Bedienhandlung ausgewählt, so wird der Variablen numberToExecute nun der Wert 1 zugewiesen, der der Nummer der internen Darstellung des ersten Ablaufschrittes entspricht. In der Zeile 204 wird anschließend der globalen Variable scanning der Wert false zugewiesen. Das bedeutet, daß beim Aufrufen der Funktion perform in der Zeile 205 die Steueranweisungen zum Aufbau des Programmablaufplanes übersprungen werden. Beim Aufruf der Funktion perform in der Zeile 205 wird entsprechend der Zeile 9 der Figur 3a erneut der Befehl BLOCK aufgerufen. Wie bereits oben beschrieben, ist dieser Befehl BLOCK in den Zeilen 300 bis 310 der Figur 3c festgelegt. Gemäß der Zeile 302 wird daraufhin überprüft, welchen Wert die globale Variable scanning besitzt. Da gemäß der Zeile 204 scanning gleich false gesetzt wurde, ist die Bedingung der Zeile 302 nicht erfüllt und die Befehle in den Zeilen 303 und 304 werden übersprungen. Ausgeführt wird nun der Befehl in Zeile 307 der Figur 3c. In der Zeile 307 wird der Variablen execute entweder der Wert true oder der Wert false zugewiesen. Dies hängt davon ab, ob der augenblickliche Wert des internen Zählers runningNumber mit dem Wert der Variablen numberToExecute identisch ist. Ist der Wert des internen Zählers runningNumber mit dem Wert der Variablen numberToExecute identisch, so bekommt die Variable execute den Wert true zugewiesen. Stimmen die Werte nicht überein, so wird der Variablen execute der Wert false zugewiesen. Da gemäß der Zeile 202 dem internen Zähler runningNumber der Wert 1 und gemäß der Zeile 203 der Variablen numberToExecute die Nummer 1 der internen Darstellung des ausgewählten ersten Ablaufschrittes zugewiesen wurde, erhält die Variable execute nun den Wert true. Anschließend wird gemäß der Zeile 309 der interne Zähler runningNumber um den Wert 1 auf 2 erhöht. Gemäß der Zeile 9 der Figur 3a wird anschließend überprüft, welchen Wert die Variable execute besitzt. Da der Variablen execute der Wert true zugewiesen wurde, ist die Bedingung in der Zeile 9 der Figur 3a erfüllt und die Anweisungen gemäß der Zeilen 11 bis 13 der Figur 3a werden ausgeführt. Dies bedeutet, daß den anwenderspezifischen Variablen a und b jeweils der Wert 3 zugewiesen wird und gemäß der Anweisung in Zeile 13 der Text performing task 1 auf den Bildschirm der Bedienperson ausgegeben wird. Die Anweisungen gemäß der Zeilen 12 bis 14 der Figur 3a entsprechen hier dem Befehlsblock, der dem ersten Ablaufschritt zugeordnet ist. Dieser Befehlsblock wird nur dann ausgeführt, wenn die Variable execute bei der Abfrage gemäß der Zeile 9 der Figur 3a den Wert true hat. Dies ist allerdings nur dann der Fall, wenn, wie in der Zeile 307 der Figur 3c vorgegeben, der erste Ablaufschritt durch die Bedienhandlung ausgewählt wurde.

Anschließend wird in der Zeile 16 der Figur 3a erneut die Funktion IF aufgerufen. Diese Funktion IF ist, wie bereits oben erwähnt, in den Zeilen 400 bis 410 der Figur 3c festgelegt. Gemäß der Zeile 402 wird überprüft, welchen Wert die globale Variable scanning hat. Da die globale Variable scanning den Wert false hat, wie in Zeile 204 festgelegt, werden die Befehle in den Zeilen 403 und 404 übersprungen und der Befehl gemäß der Zeile 407 ausgeführt. Der Wert des internen Zählers runningNumber beträgt nun 2 und stimmt nicht mit dem Wert der Variablen numberToExecute überein, der aufgrund der Auswahl des ersten Ablaufschrittes 1 beträgt. Der Variablen execute wird daher der Wert false zugewiesen. Anschließend wird entsprechend der Zeile 409 der interne Zähler runningNumber um 1 auf 3 erhöht. Gemäß der Zeile 16 der Figur 3a wird erneut der Wert der Variablen execute überprüft. Da deren Wert false ist, ist die Bedingung nicht erfüllt und die Anweisungen gemäß der Zeilen 18 und 19 werden übersprungen. Da der zweiten Ablaufschritt 3000 durch die Bedienhandlung nicht ausgewählt wurde, wird der diesen zweiten Ablaufschritt zugeordnete Befehlsblock gemäß der Zeilen 18 und 19 der Figur 3a übersprungen. Entsprechendes wird für die Befehlsblöcke der anderen Ablaufschritte des Ablaufes durchgeführt.

Ist die Ausführung der Funktion perform beendet, so werden nun erneut aufgrund der geänderten aktuellen Ablaufsituation andere Ablaufschritte markiert und eine Bedienhandlung erwartet. Wird eine solche Bedienhandlung aufgrund der Auswahl eines ausführbaren Ablaufschrittes empfangen, so wird erneut, wie bereits oben beschrieben, gemäß der Zeilen 200 bis 206 der Figur 3c die Funktion perform ausgeführt. Dabei werden durch das Programm alle durch die Funktion perform definierten Ablaufschritte abgearbeitet, allerdings nur der Befehlsblock desjenigen Ablaufschrittes ausgeführt, der durch die Bedienhandlung ausgewählt wurde. Nachdem der letzte Ablaufschritt ausgeführt wurde, wird das erfindungsgemäße Verfahren beendet. Im vorliegenden Fall ist dies die Ausführung des fünften Ablaufschrittes mit der dritten Aufgabe Task 3 oder die Nichterfüllung der anderen Bedingung gemäß der dritten Entscheidung Decision 3 im sechsten Ablaufschritt.

Mittels eines einzigen Befehls wird daher sowohl die Steueranweisung für den Aufbau der graphischen Darstellung eines Ablaufschrittes in dem Programmablaufplan als auch die Ausführung des dem jeweiligen Ablaufschritt zugeordneten Befehlsblockes durchgeführt. Solche Befehle sind im vorliegenden Ausführungsbeispiel BLOCK, IF und WHILE. Die Verhaltensweise dieser Befehle, d. h. entweder Aufbau der graphischen Darstellung des jeweiligen Ablaufschrittes oder Ausführung des angeordneten Befehlsblocks, hängt von dem Wert der globalen Variable scanning ab. Die Ausführung des Befehlsblocks des jeweiligen Ablaufschrittes hängt zusätzlich von dem Wert der Variablen execute ab.

## Patentansprüche

1. Verfahren für eine graphische Steuerung eines Ablaufes mit mehreren Ablaufschritten in einem Netzwerkmanagementsystem, wobei der Ablauf aus Befehlsblöcken für eine Ausführung der jeweiligen Ablaufschritte und Steueranweisungen zur Verknüpfung der Befehlsblöcke gebildet wird,
**dadurch gekennzeichnet,** daß in einem ersten Verfahrensschritt (2) die Steueranweisungen zur Verknüpfung der Befehlsblöcke zur Darstellung eines graphischen Programmablaufplanes des Ablaufes auf einer Anzeigevorrichtung ausgeführt werden, daß in einem zweiten Verfahrensschritt (4) diejenigen Ablaufschritte, die aufgrund einer gegebenen Ablaufsituation ausführbar sind, in dem graphischen Programmablaufplan gekennzeichnet werden, und daß in einem dritten Verfahrensschritt (7) aufgrund einer empfangene Eingabe der Befehlsblock desjenigen gekennzeichneten Ablaufschrittes ausgeführt wird, der durch die Eingabe ausgewählt wird.

2. Verfahren nach Anspruch 1, dadurch gekennzeichnet, daß die Befehlsblöcke zur Ausführung der jeweiligen Ablaufschritte und die Steueranweisungen zur Verknüpfung der Befehlsblöcke in der gleichen Programmiersprache verfaßt sind und ein Programm zur Definition des Ablaufes bilden.

3. Verfahren nach Anspruch 2, dadurch gekennzeichnet, daß das Programm zur Definition des Ablaufes in der Programmiersprache JAVA verfaßt ist.

4. Verfahren nach einem der oberen Ansprüche, dadurch gekennzeichnet, daß in dem ersten Verfahrensschritt (2) ein aus den Befehlsblöcken für eine Ausführung der jeweiligen Ablaufschritte und den Steueranweisungen zur Verknüpfung der Befehlsblöcke gebildetes Programm ausgeführt wird, wobei bei diesem Programmdurchlauf Befehlsblöcke zur Ausführung der Ablaufschritte übersprungen werden.

5. Verfahren nach Anspruch 4, dadurch gekennzeichnet, daß in dem dritten Verfahrensschritt das Programm erneut ausgeführt wird, wobei bei diesem Programmdurchlauf Befehlsblöcke zur Ausführung der Ablaufschritte solange übersprungen werden, bis der Befehlsblock des ausgewählten Ablaufschrittes erreicht ist.

6. Verfahren nach einem der oberen Ansprüche, dadurch gekennzeichnet, daß ein Befehl (100, 200) sowohl für die Darstellung eines der Ablaufschritte in dem Programmablaufplan als auch zur Ausführung dieses Ablaufschrittes verwendet wird.

7. Verfahren nach Anspruch 6, dadurch gekennzeichnet, daß der Befehl (100, 200) auf eine globale Variable zugreift, die dazu verwendet wird festzustellen, ob der Befehlsblock des Ablaufschrittes ausgeführt wird oder nicht.

8. Verfahren nach Anspruch 7, dadurch gekennzeichnet, daß mittels eines internen Zählers den einzelnen Ablaufschritten des Ablaufes bei der Erzeugung des Programmablaufplans jeweils eine spezifische Nummer für die interne Darstellung des jeweiligen Ablaufschrittes zugewiesen wird und daß diese spezifische Nummer dazu verwendet wird festzustellen, ob der Befehlsblock des jeweiligen Ablaufschrittes ausgeführt wird.

9. Steuereinrichtung für eine graphische Steuerung eines Ablaufes mit mehreren Ablaufschritten in einem Netzwerkmanagementsystem, die so ausgestaltet ist, daß Befehlsblöcke für eine Ausführung der jeweiligen Ablaufschritte und Steueranweisungen zur Verknüpfung der Befehlsblöcke verorbeitbar sind,
**dadurch gekennzeichnet,** daß die Steuereinrichtung weiter so ausgestaltet ist, daß sie in einem ersten Verfahrensschritt (2) die Steueranweisungen zur Verknüpfung der Befehlsblöcke so verarbeitet, daß ein Programmablaufplan des Ablaufes auf einer Anzeigevorrichtung darstellbar ist und daß sie in einem weiteren Verfahrensschritt (7) aufgrund einer Eingabe zur Auswahl eines der Ablaufschritte den Befehlsblock des ausgewählten Ablaufschrittes ausführt.

## Claims

1. Method for a graphical control of an operation comprising a plurality of operation steps in a network management system, wherein the operation is formed from instruction blocks for executing the respective operation steps and control directives for linking the instruction blocks, characterized in that, in a first step (2) of the method, the control directives for linking the instruction blocks to display a graphical program operation plan of the operation is executed on a display device, in that, in a second step (4) of the method, those operation steps which can be executed on the basis of a given operation situation are characterized in the graphical program operation plan, and in that, in a third step (7) of the method, on the basis of a received input, the instruction block is executed of that characterized operation step which is selected by the input.

2. Method according to Claim 1, characterized in that the instruction blocks for executing the respective operation steps and the control directives for linking the instruction blocks are written in the same programming language and form a program for defining the operation.

3. Method according to Claim 2, characterized in that the program for defining the operation is written in the programming language JAVA.

4. Method according to one of the above claims,
characterized in that, in the first step (2) of the method, a program is executed which is formed from the instruction blocks for executing the respective operation steps and the control directives for linking the instruction blocks, instruction blocks for executing the operation steps being skipped during this program run.

5. Method according to Claim 4, characterized in that, in the third step of the method, the program is again executed, instruction blocks for executing the operation steps being skipped in this program run until the instruction block of the selected operation step is reached.

6. Method according to one of the above claims,
characterized in that an instruction (100, 200) is used both for the display of one of the operation steps in the program operation plan and for executing said operation step.

7. Method according to Claim 6, characterized in that the instruction (100, 200) accesses a global variable which is used to determine whether the instruction block of the operation step is being performed or not.

8. Method according to Claim 7, characterized in that a specific number for the internal display of the respective operation step is assigned in each case to the individual operation steps of the operation in the generation of the program operation plan by means of an internal counter and in that said specific number is used to determine whether the instruction block of the respective operation step is being executed.

9. Control device for a graphical control of an operation comprising a plurality of operation steps in a network management system, which control device is so designed that instruction blocks for executing the respective operation steps and control directives for linking the instruction blocks can be processed, characterized in that the control device is furthermore designed so that, in a first step (2) of the method, it processes the control directives for linking the instruction blocks so that a program operation plan of the operation can be displayed on a display device and in that, in a further step (7) of the method, it executes the instruction block of the selected operation step on the basis of an input for selecting one of the operation steps.

## Revendications

1. Procédé pour une commande graphique d'une opération en plusieurs étapes dans un système de gestion de réseau, l'opération étant composée de blocs de commandes pour l'exécution des étapes respectives et d'instructions de commande pour associer les blocs de commandes, caractérisé en ce que dans une première étape (2) sont exécutées les instructions de commande pour associer les blocs de commandes pour la représentation d'un organigramme graphique de programmation de l'opération sur un dispositif d'affichage, en ce que dans une deuxième étape (4), celles des étapes qui peuvent être exécutées sur la base d'une situation opérationnelle donnée, sont identifiées dans l'organigramme graphique de programmation, et en ce que dans une troisième étape (7), sur la base d'une entrée reçue, le bloc de commandes de l'étape identifiée respective est exécuté, qui est sélectionné par l'entrée.

2. Procédé selon la revendication 1, caractérisé en ce que les blocs de commandes pour exécuter les étapes respectives et les instructions de commande pour associer les blocs de commandes sont écrits dans le même langage de programmation et forment un programme pour définir l'opération.

3. Procédé selon la revendication 2, caractérisé en ce que le programme pour définir l'opération est écrit dans le langage de programmation JAVA.

4. Procédé selon l'une quelconque des revendications précédentes, caractérisé en ce que dans la première étape (2) est exécuté un programme, composé des blocs de commandes pour l'exécution des étapes respectives et des instructions de commande pour l'association des blocs de commandes, des blocs de commandes pour exécuter les étapes étant sautés pendant cette exécution du programme.

5. Procédé selon la revendication 4, caractérisé en ce que dans la troisième étape, le programme est à nouveau exécuté, des blocs de commandes pour exécuter les étapes étant sautés pendant cette exécution du programme jusqu'à ce que le bloc de commandes de l'étape sélectionnée soit atteint.

6. Procédé selon l'une quelconque des revendications précédentes, caractérisé en ce qu'une commande (100, 200) est utilisée aussi bien pour la représentation d'une des étapes dans l'organigramme de programmation que pour l'exécution de cette étape.

7. Procédé selon la revendication 6, caractérisé en ce que la commande (100, 200) accède à une variable globale qui est utilisée pour déterminer si le bloc de commandes de l'étape est exécuté ou non.

8. Procédé selon la revendication 7, caractérisé en ce qu'au moyen d'un compteur interne, un numéro spécifique est affecté aux étapes individuelles de l'opération lors de la génération de l'organigramme de programmation respectivement pour la représentation interne de l'étape respective et en ce que ce numéro spécifique est utilisé pour déterminer si le bloc de commandes de l'étape respective est exécuté.

9. Dispositif de commande pour une commande graphique d'une opération en plusieurs étapes dans un système de gestion de réseau qui est réalisé de sorte que des blocs de commandes pour exécuter les étapes respectives et les instructions de commande pour associer les blocs de commandes peuvent être traités, caractérisé en ce que le dispositif de commande est en outre réalisé de sorte qu'il traite dans une première étape (2) les instructions de commande pour associer les blocs de commandes de sorte qu'un organigramme de programmation de l'opération peut être représenté sur un dispositif d'affichage, et en ce qu'il exécute dans une autre étape (7), sur la base d'une entrée pour sélectionner une étape, le bloc de commandes de l'étape sélectionnée.
